# EUROPÄISCHE PATENTSCHRIFT

(11) **EP 4 065 392 B1**
(45) Veröffentlichungstag und Bekanntmachung des Hinweises auf die Patenterteilung: **30.04.2025**
(21) Anmeldenummer: 20815751.1
(22) Anmeldetag: 24.11.2020
(51) Int. Cl.: B60G 3/20, B60G 13/00, B60G 3/18, B60G 3/28

(54) **ANGETRIEBENE VIERLENKER-HINTERACHSE FÜR EIN KRAFTFAHRZEUG**
DRIVEN FOUR-LINK REAR AXLE FOR A MOTOR VEHICLE
ESSIEU ARRIÈRE À QUATRE LIAISONS ENTRAÎNÉ POUR VÉHICULE AUTOMOBILE

(30) Priorität: 29.11.2019 DE 102019218640
(43) Veröffentlichungstag der Anmeldung: 05.10.2022
(73) Patentinhaber: VOLKSWAGEN AKTIENGESELLSCHAFT, 38440 Wolfsburg (DE)
(72) Erfinder: REHBEIN, Dirk-Heinrich, 38179 Schwülper (DE)
(86) Internationale Anmeldenummer: PCT/EP2020/083259
(87) Internationale Veröffentlichungsnummer: WO 2021/105150

(56) Entgegenhaltungen:
- CN-A- 106 515 332
- DE-A1- 10 250 343
- DE-A1- 10 253 265
- DE-A1- 102004 024 899
- DE-A1- 102004 060 589
- DE-A1- 102010 021 215
- DE-A1- 102017 113 708

## Beschreibung

Die Erfindung bezieht sich auf eine angetriebene Vierlenker-Hinterachse für ein Kraftfahrzeug gemäß dem Oberbegriff von Patentanspruch 1.

Eine solche angetriebene Vierlenker-Hinterachse ist aus DE 10 2004 060 589 A1 bekannt.

Weitere angetriebene Vierlenker-Hinterachsen sind aus DE 10 2010 021 215 A1 und CN 106 515 332 A bekannt.

Davon ausgehend liegt der Erfindung die Aufgabe zu Grunde, unter Beibehaltung des Achsprinzips einer angetriebenen Vierlenker-Hinterachse eine bessere Raumausnutzung unter Beibehaltung einer großen Durchladebreite an einem Kraftfahrzeug zu erzielen.

Vierlenker-Hinterachsen sind in verschiedenen Bauformen für Kraftfahrzeuge mit nicht-angetriebene Hinterachsen bereits allgemein bekannt. Bei einer angetriebenen Hinterachse stellt sich jedoch das Problem der Unterbringung der für den Antrieb benötigten Gelenkwelle im Bereich der Radaufhängung, so dass Radaufhängungskonfigurationen für nicht-angetriebene Hinterachsen in der Regel für angetriebene Hinterachsen nicht geeignet sind.

Die vorstehend genannte Aufgabe wird durch eine angetriebene Vierlenker-Hinterachse gemäß Patentanspruch 1 gelöst.

Dies ermöglicht an einem Personenkraftfahrzeug die Anordnung sämtlicher Bauteile zur Abstützung des Fahrzeugrads sowie zum Antrieb desselben unterhalb eines Ladebodens, wodurch eine besonders große Durchladebreite und damit im Vergleich zu herkömmlichen Dämpferanordnungen ein größeres Kofferraumvolumen an einem Kraftfahrzeug erzielt wird.

Gleichwohl werden beim Ein- und Ausfedern des zugehörigen Fahrzeugrads der Hinterachse Kollisionen zwischen den radführenden Lenkern einerseits und dem Schwingungsdämpfer und der Gelenkwelle andererseits vermieden.

Die Neigung des Schwingungsdämpfers begünstigt überdies eine progressive Dämpferübersetzung, d.h. eine Dämpferübersetzung welche mit größer werdender Einfederung zunimmt. Entsprechend nimmt die Wirkung des Schwingungsdämpfers über den Einfederweg zu.

Die direkte Anbindung des Schwingungsdämpfers am Radträger gestattet im Vergleich zu DE 10 2010 021 215 A1 ein größeres und somit besseres Wegübersetzungsverhältnis, woraus ein besseres Ansprechverhalten und ein verbesserter Komfort resultieren.

Durch Neigung des Schwingungsdämpfer in Fahrzeugquerrichtung nach innen, wobei in Einbaulageruhestellung der Neigungswinkel zur Vertikalen in Fahrzeugquerrichtung in einem Bereich von 20° bis 30° liegt, resultiert eine besonders günstige Ausnutzung des zur Verfügung stehenden Bauraums.

Die Anordnung des radseitigen Anbindungspunkts innerhalb der Felge des Fahrzeugrads ermöglicht eine verhältnismäßig große Axiallänge des Schwingungsdämpfers mit entsprechendem Dämpfungsvermögen.

Durch die Anordnung des radseitigen Anbindungspunkt des vorderen unteren Querlenkers außerhalb der Felge des Fahrzeugrads steht innerhalb der Felge mehr Platz für den Schwingungsdämpfer zur Verfügung.

Besondere Ausführungsarten der Erfindung sind Gegenstand weiterer Patentansprüche.

So kann beispielsweise der Schwingungsdämpfer mit seinem aufbauseitigen Anbindungspunkt seitlich, nämlich fahrzeugaußenseitig an einen Längsträger eines Fahrzeugaufbaus angekoppelt sein. Dies ermöglicht eine platzsparende Unterbringung und einfache Montage.

Weiterhin kann der aufbauseitige Anbindungspunkt des Schwingungsdämpfers unterhalb der Höhe eines Fahrzeugbodens des Kraftfahrzeugs angeordnet sein, so dass die Durchladebreite durch den Schwingungsdämpfer nicht beeinträchtigt wird.

In diesem Sinne kann ferner der radseitige Anbindungspunkt des Schwingungsdämpfers in Bezug auf die Vertikalrichtung tieferliegend an dem Radträger angekoppelt sein, als ein radseitiger Anbindungspunkt des vorderen unteren Querlenkers.

Gemäß einer weiteren Ausführungsart der Erfindung kann der Schwingungsdämpfer stärker in Fahrtrichtung als in Fahrzeugquerrichtung geneigt sein.

Im Hinblick auf ein verbessertes Seiten- und Längskraftlenken ist es ferner von Vorteil, den fahrzeugaufbauseitigen Anbindungspunkt des vorderen unteren Querlenkers in Fahrtrichtung vor dessen Anbindungspunkt am Radträger anzuordnen.

Nachfolgend wird die Erfindung anhand eines in der Zeichnung dargestellten Ausführungsbeispiels näher erläutert. Die Zeichnung zeigt in:

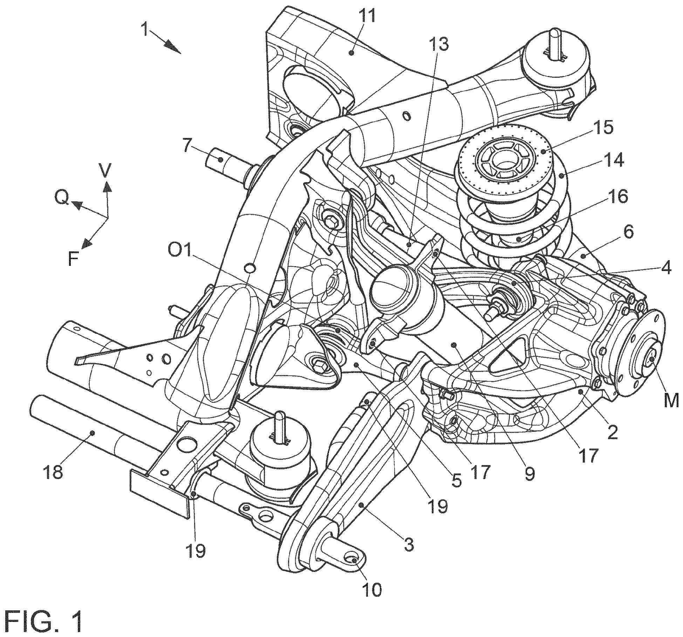

- Figur 1: eine räumliche Ansicht eines Ausführungsbeispiels für eine angetriebene Vierlenker-Hinterachse eines Kraftfahrzeugs
- Figur 2: eine Seitenansicht der Hinterachse gemäß Figur 1 zur Veranschaulichung der Ausrichtung des Schwingungsdämpfers,
- Figur 3: eine Seitenansicht der Hinterachse gemäß Figur 1 zur Veranschaulichung der Lage einer virtuellen Lenkachse,
- Figur 4: eine Ansicht von oben auf die Hinterachse gemäß Figur 1, und in
- Figur 5: eine Ansicht von hinten auf die Hinterachse gemäß Figur 1.

Die Figuren zeigen beispielhaft eine angetriebene Vierlenker-Hinterachse 1 für ein Personenkraftfahrzeug.

Die angetriebene Vierlenker-Hinterachse 1 umfasst je Radseite als Bestandteile einen Radträger 2, einen Längslenker 3, einen oberen Querlenker 4, einen vorderen unteren Querlenker 5 und einen hinteren unteren Querlenker 6 zur fahrzeugaufbauseitigen Abstützung des Radträgers 2. Ferner sind eine Gelenkwelle 7 zur Übertragung eines Antriebsmoments an ein an dem Radträger 2 drehbar gelagertes Fahrzeugrad 8 sowie ein Schwingungsdämpfer 9 vorgesehen.

Der Längslenker 3, welcher überwiegend in Fahrtrichtung F verläuft, ist elastisch mittels eines Gummimetalllagers 10 an einem Fahrzeugaufbau angekoppelt, so dass der Längslenker 3 um eine sich im Wesentlichen in Fahrzeugquerrichtung Q verlaufende Drehachse schwenken kann. Ferner ist der Längslenker 3 starr mit dem Radträger 2 gekoppelt, vorliegend beispielhaft mittels zwei Schrauben. Es ist jedoch ebenfalls möglich, an dieser Stelle eine elastische Ankopplung über zwei Gummimetalllager vorzunehmen oder aber alternativ den Radträger 2 einstückig mit dem Längslenker 3 auszubilden.

Der obere Querlenker 4 ist in Fahrtrichtung F und oberhalb der Mitte des Fahrzeugrad 7, im folgenden Radmitte M, an den Radträger 2 und einen Hilfsrahmen 11 des Fahrzeugaufbaus angekoppelt. Die Ankopplung kann beidseitig über gummielastische Lager erfolgen. Vorzugsweise liegt der Anbindungspunkt O2 am Radträger 2 dabei in Fahrtrichtung F etwas vor dem Anbindungspunkt O1 am Fahrzeugaufbau, vorliegend Hilfsrahmen 11, um ein verbessertes Seitenkraftlenken zu ermöglichen.

Ferner befindet sich der radseitige Anbindungspunkt O2 oberhalb eines unteren Endabschnitts des in Fahrtrichtung F geneigten Schwingungsdämpfers 9. Ein Verschieben des radseitigen Anbindungspunkts O2 am Radträger 2 in Fahrtrichtung ist nicht möglich, da ansonsten der obere Querlenker 4 beim Ein- und Ausfedern des Fahrzeugrads 8 mit dem Schwingungsdämpfer 9 kollidieren würde, was es zu vermeiden gilt.

Der obere Querlenker 4 des Ausführungsbeispiels ist im Hinblick auf die Vorbeiführung an einem Längsträger 12 des Fahrzeugaufbaus mit einer Kröpfung 13 versehen, welche unter dem Längsträger 12 hindurchführt. Indem die Kröpfung des Querlenkers 4 auf eine Ebene beschränkt bleibt, kann dieser einheitlich sowohl für die linke als auch die rechte Fahrzeugseite verwendet werden. Hierdurch bleibt der Fertigungs- und Montageaufwand gering. Jedoch kann wegen der Gelenkwelle 6 der aufbauseitige Anbindungspunkt O1 des oberen Querlenkers 4 nicht weiter entgegen der Fahrtrichtung F nach hinten verschoben werden.

In einer Abwandlung des Ausführungsbeispiels kommt ein zweidimensional gekröpfter oberer Querlenker 4 zum Einsatz, dessen aufbauseitiger Anbindungspunkt O1 in Fahrtrichtung hinter der Gelenkwelle 7 liegt. Hierdurch wird ein weiter verbessertes Seitenkraftlenken ermöglicht.

Der vordere untere Querlenker 5 ist in Fahrtrichtung F vor und unterhalb der Radmitte M an den Radträger 2 angekoppelt. Vorzugsweise erfolgt die Ankopplung elastisch, beispielsweise mittels eines Gummimetalllagers. Der entsprechende radseitige Anbindungspunkt S2 liegt vorzugsweise außerhalb der Felge des Fahrzeugrads 8. Ferner ist der vordere untere Querlenker 5 an den Fahrzeugaufbau, vorzugsweise den an diesem angeordneten Hilfsrahmen 11 angekoppelt. Vorzugsweise erfolgt die Ankopplung auch hier elastisch, beispielsweise mittels eines Gummimetalllagers.

Der aufbauseitige Anbindungspunkt S1 des vorderen unteren Querlenkers 5 liegt bevorzugt in Fahrtrichtung F gesehen vor dem radseitigen Anbindungspunkt S2, um ein verbessertes Seitenlenken im Sinne eines Vorspureffekts unter Seitenkraft und Längskraftlenken zu ermöglichen. Insbesondere kann hierbei in einer Einbaulageruhestellung in der FQ-Ebene ein Anstellwinkel zur Fahrzeugquerrichtung Q im Bereich von 5° bis 30° vorgesehen sein. Zudem verläuft der vordere untere Querlenker 5 bevorzugt im Wesentlichen horizontal.

Der vordere untere Querlenker 5 kann insbesondere als stabförmiger Lenker oder Spurstange mit genau einem radseitigen Anbindungspunkt S2 und genau einem aufbauseitigen Anbindungspunkt S1 ausgeführt sein.

Der hintere untere Querlenker 6 ist in Fahrtrichtung F hinter und unterhalb der Radmitte M an den Radträger 2 angekoppelt. Der entsprechende radseitige Anbindungspunkt ist in den Figuren mit U4 gekennzeichnet. Gleichermaßen ist der hintere untere Querlenker 6 in Fahrtrichtung F hinter und unterhalb der Radmitte am Fahrzeugaufbau, vorliegend am Hilfsrahmen 11 angekoppelt. Der entsprechende aufbauseitige Anbindungspunkt ist in den Figuren mit U3 bezeichnet. Die Ankopplung kann hierbei beidseits elastisch, beispielsweise wiederum über ein Gummimetalllager, erfolgen.

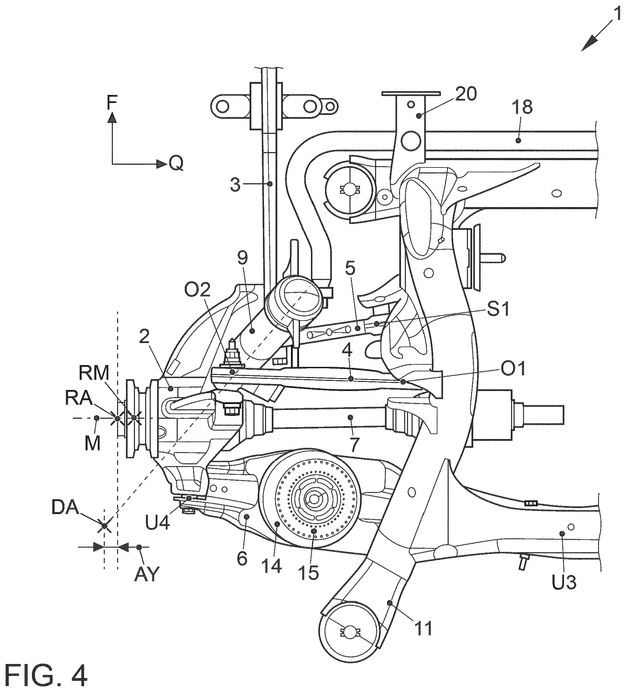

Wie insbesondere Figur 4 entnommen werden kann, verläuft der hintere untere Querlenker 6 in Fahrtrichtung F hinter der Gelenkwelle 7 überwiegend in Fahrzeugquerrichtung Q.

Der radseitige Anbindungspunkt U4 des hinteren unteren Querlenker 6 liegt von der Fahrzeugaußenseite betrachtet in Fahrtrichtung F gesehen bevorzugt möglichst dicht am aufbauseitigen Anbindungspunkt U3. Insbesondere kann hierbei in einer Einbaulageruhestellung in der FQ-Ebene ein Anstellwinkel entgegen der Fahrzeugquerrichtung Q im Bereich von 5° bis 10° vorgesehen sein.

Bei dem dargestellten Ausführungsbeispiel ist der hintere untere Querlenker 6 als Federlenker ausgestaltet, welcher eine Aufbaufeder 14 abstützt. Vorliegend ist letztere beispielhaft als Schraubenfeder dargestellt, die über eine Federaufnahme 15 an den Fahrzeugaufbau anschließt. Innerhalb der Schraubenfeder kann eine Zusatzfeder 16 angeordnet sein, um eine progressive Radlastkurve zu erzeugen. Die Federaufnahme 15 stützt ebenfalls die Zusatzfeder 16 am Fahrzeugaufbau ab.

Der Schwingungsdämpfer 9 greift unterhalb und in Fahrtrichtung F vor der Radmitte M an dem Radträger 2 an. Er verläuft in Fahrtrichtung F vor der Gelenkwelle 7 sowie zwischen dem vorderen unteren Querlenker 5 und dem oberen Querlenker 4 hindurch und dabei in Fahrtrichtung F geneigt zu einem aufbauseitigen Angriffspunkt DO. In Einbaulageruhestellung liegt der Neigungswinkel zur Vertikalen in Fahrtrichtung F, d.h. in einer FV-Ebene, im Bereich von 20° bis 60°. Zudem liegt der aufbauseitiger Anbindungspunkt DO des Schwingungsdämpfers 9 hierbei innerhalb der Höhe des Fahrzeugrads 8.

Der Schwingungsdämpfer 9 ist in Fahrtrichtung F gesehen hinter dem vorderen unteren Querlenker 4 an den Radträger 2 angekoppelt. Der entsprechende untere Anbindungspunkt des Schwingungsdämpfers 9 ist in den Figuren mit DU bezeichnet. Dieser liegt in Fahrtrichtung F gesehen vor und unterhalb der Radmitte M in einem Bereich innerhalb der Felge des Fahrzeugrads 8.

Der radseitige Anbindungspunkt DU des Schwingungsdämpfers 9 ist in Bezug auf die Vertikalrichtung V tieferliegend an dem Radträger 2 anordnet, als der radseitige Anbindungspunkt S2 des vorderen unteren Querlenkers 4.

In Fahrzeugquerrichtung liegt der Punkt DU weiter von einer Fahrzeuglängsmittelachse entfernt als der Punkt S2.

Die Ankopplung des Schwingungsdämpfers 9 am Radträger 2 erfolgt bevorzugt elastisch.

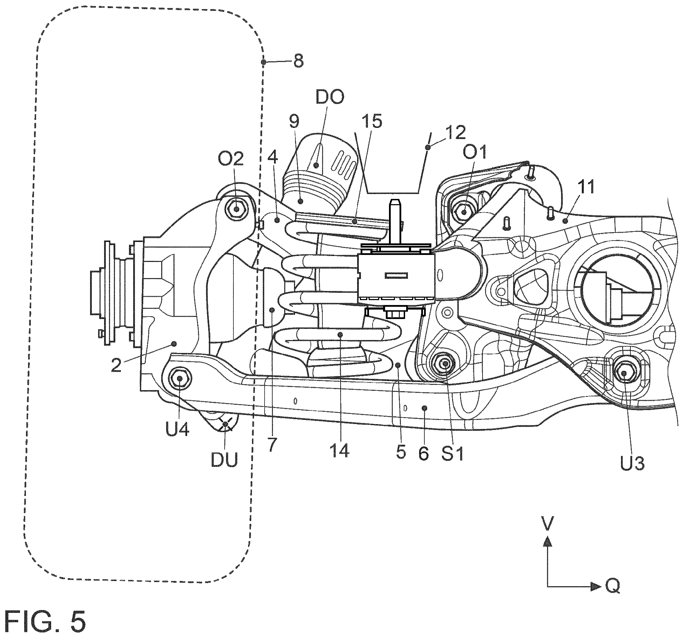

Wie bereits erwähnt, ist der Schwingungsdämpfer in Fahrtrichtung F gesehen schräg nach vorn geneigt. Zudem kann, wie in Figur 5 gut zu erkennen, eine zusätzliche Neigung in Fahrzeugquerrichtung Q zur Fahrzeugmitte vorgesehen sein. Der entsprechende Neigungswinkel zur Vertikalen V in Fahrzeugquerrichtung Q, d.h. in der QV-Ebene, liegt in einem Bereich von 20 bis 30°.

Vorzugsweise ist der Schwingungsdämpfer 9 stärker in Fahrtrichtung F als in Fahrzeugquerrichtung Q geneigt.

Der aufbauseitige Anbindungspunkt DO des Schwingungsdämpfers 9 ist vorzugsweise elastisch gelagert und befindet sich in einem Bereich unterhalb der Reifenoberseite. Mit anderen Worten, der aufbauseitige Anbindungspunkt DO des Schwingungsdämpfers 9 ist den Einbauruhestellung der Hinterachse 1 in Bezug auf die Vertikalrichtung V in einem Bereich innerhalb der Höhe des Fahrzeugrads 8 angeordnet.

Die aufbauseitige Anbindung des Schwingungsdämpfers 9 erfolgt vorzugsweise unterhalb der Höhe eines Fahrzeugbodens und vorzugsweise an der Außenseite des Längsträgers 12.

Durch die Lage des aufbauseitigen Anbindungspunkts DO bzw. eines korrespondierenden Lagers seitlich, nämlich fahrzeugaußenseitig am Längsträger 12 ist eine Befestigung, beispielsweise Verschraubung von außen an Schraubstellen 17 eines Dämpferlagers auf einfache Art und Weise möglich.

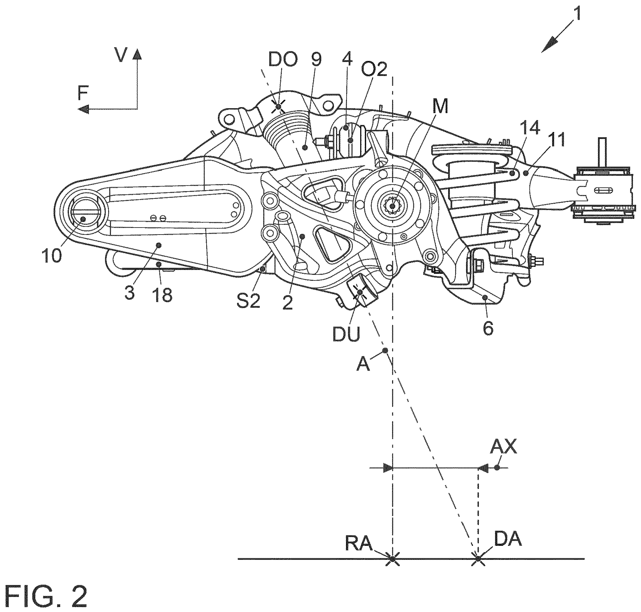

Damit infolge der Dämpferkräfte beim Einfedern das Fahrzeugrad 8 nicht in Richtung Nachspur gedrückt wird, was ein unerwünschtes Übersteuern des Fahrverhalten zur Folge hätte, ist die Dämpferachse A, welche durch die aufbauseitigen und radseitigen Anbindungspunkte DO und DU des Schwingungsdämpfers 9 verläuft, derart ausgerichtet, dass ihre Verlängerung hinter dem Radaufstandspunkt RA auf die Fahrbahn trifft. Dieser Auftreffpunkt ist in Figur 2 mit DA bezeichnet. Der Radaufstandspunkt RA befindet sich ohne Nachlauf senkrecht unter der Radmitte M. Bei einem fahrenden Kraftfahrzeug kann sich der Radaufstandspunkt RA infolge des Reifennachlaufs bei Bewegung in Fahrtrichtung F etwas nach hinten verschieben. Auch in diesem Fall liegt der Auftreffpunkt DA in Fahrtrichtung F gesehen hinter dem Radaufstandspunkt RA.

Dies bedeutet, dass, wenn man auch die Neigung des Schwingungsdämpfers 9 in Fahrzeugquerrichtung Q einbezieht, die in den Figuren 2 und 4 dargestellten Abstände AX und AY des Auftreffpunkts DA vom Radaufstandspunkt RA in Fahrtrichtung F sowie in Fahrzeugquerrichtung Q in allen Ein- und Ausfederungszuständen der Hinterachse 1 jeweils stets das gleiche Vorzeichen aufweisen und behalten.

In Bezug auf den oberen Querlenker 4 ist der Schwingungsdämpfer 9 in Fahrtrichtung F vor dem oberen Querlenker 4 angeordnet. Der radseitige Anbindungspunkt O2 des oberen Querlenker 4 liegt bei Betrachtung in der QF-Ebene in etwa über dem radseitigen Anbindungspunkt DU des Schwingungsdämpfers 9 oder gegebenenfalls geringfügig dahinter.

Ferner befindet sich die Gelenkwelle 7 in Fahrtrichtung hinter dem Schwingungsdämpfer 9 und dem oberen Querlenker 4.

Ein Stabilisator 18 kann beispielsweise mittels einer Koppelstange 19 unmittelbar an den Radträger 2 angekoppelt sein. Er verläuft von seinem Ankopplungspunkt an die Koppelstange 19 zunächst in Fahrtrichtung F nach vorn und ist anschließend in Fahrzeugquerrichtung Q abgewinkelt. Der Stabilisator 18 ist in einem Stabilisatorlager 20 aufgenommen, welches am Fahrzeugaufbau, vorliegend am Hilfsrahmen 11 festgelegt ist.

In einer Ausführungsvariante ist ohne Beschränkung hierauf ein etwaiges Antriebsaggregat zum Antreiben der Gelenkwelle 7 am Hilfsrahmen 11 angeordnet, vorzugsweise elastisch an diesem gelagert. Das Antriebsaggregat kann beispielsweise ein Elektromotor sein.

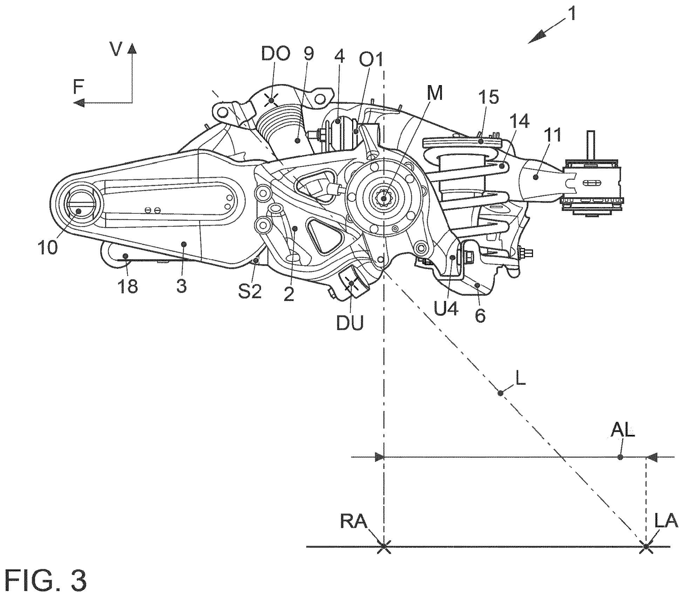

Aus der vorstehend erläuterten Konfiguration der Vierlenker-Hinterachse resultiert eine virtuelle, d.h. gedachte Lenkachse L, wie sie in Figur 3 dargestellt ist. Diese trifft vorliegend stets hinter dem Radaufstandspunkt RA im Punkt LA auf die Fahrbahn. Hierdurch wird gewährleistet, dass sich das Fahrzeugrad 8 unter Seitenkrafteinfluss in Richtung Vorspur bewegt. Die Lage der virtuellen Lenkachse LA wird vorliegend primär durch die Anordnung der Querlenker 4, 5 und 6 bestimmt. Demgegenüber tritt der Einfluss der Steifigkeiten der verwendeten Gummimetalllager an den Anbindungspunkten dieser Lenker zurück.

Durch die vorstehend erläuterte Anordnung des Schwingungsdämpfers 9, insbesondere dessen Neigung sowie die Anordnung des unteren Anbindungspunkts DU möglichst weit von der Fahrzeuglängsmittelachse entfernt und bevorzugt innerhalb der Felge des Fahrzeugrad 8 ergibt sich ein kompaktes Package ohne die Bodenfreiheit des Fahrzeugs zu beeinträchtigen.

Gleichzeitig ist es hierdurch möglich, den oberen aufbauseitigen Anbindungspunkt DO des Schwingungsdämpfers 9 möglichst fahrbahnnah anzuordnen, wodurch eine große Durchladebreite am Fahrzeug erzielt wird.

Überdies ermöglicht die vorstehend erläuterte Anordnung eine progressive Dämpferübersetzung, d.h. die Dämpferübersetzung nimmt mit größer werdender Einfederung des betreffenden Fahrzeugrads 8 zu. Dies hat den Vorteil, dass auch die Wirkung des Schwingungsdämpfers 9 mit zunehmendem Einfederweg zunimmt.

Die Neigung des Schwingungsdämpfers begünstigt zudem ein Vorspurlenken durch Dämpfungskräfte beim Einfedern.

Die Erfindung wurde vorstehend anhand verschiedener Ausführungsvarianten und weiterer Abwandlungen näher erläutert. Diese dienen dazu, die Ausführbarkeit der Erfindung zu belegen. Technische Einzelmerkmale, welche oben im Kontext weiterer Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist. Die Erfindung ist daher ausdrücklich nicht auf die konkret beschriebenen Ausführungsvarianten beschränkt, sondern umfasst alle durch die Patentansprüche definierten Ausgestaltungen.
- 1: Vierlenker-Hinterachse
- 2: Radträger
- 3: Längslenker
- 4: oberer Querlenker
- 5: vorderer unterer Querlenker
- 6: hinterer unterer Querlenker
- 7: Gelenkwelle
- 8: Fahrzeugrad
- 9: Schwingungsdämpfer
- 10: Gummimetalllager
- 11: Hilfsrahmen (Fahrzeugaufbau)
- 12: Längsträger des Fahrzeugaufbaus
- 13: Kröpfung
- 14: Aufbaufeder
- 15: Federaufnahme
- 16: Zusatzfeder
- 17: Schraubstelle oberes Dämpferlager
- 18: Stabilisator
- 19: Koppelstange
- 20: Stabilisatorlager
- A: Dämpferachse
- AX: Abstand DA zu RA in Fahrtrichtung F
- AY: Abstand DA zu RA in Fahrzeugquerrichtung Q
- DA: Auftreffpunkt Dämpferachse auf Fahrbahn
- DO: aufbauseitiger Anbindungspunkt des Schwingungsdämpfers
- DU: radseitiger Anbindungspunkt des Schwingungsdämpfers
- F: Fahrtrichtung (vorwärts)
- L: virtuelle (gedachte) Lenkachse
- LA: Auftreffpunkt virtuelle Lenkachse auf Fahrbahn
- M: Radmitte
- O1: aufbauseitiger Anbindungspunkt des oberen Querlenkers 4
- O2: radseitiger Anbindungspunkt des oberen Querlenkers 4
- Q: Fahrzeugquerrichtung
- RA: Radaufstandspunkt
- S1: aufbauseitiger Anbindungspunkt des vorderen unteren Querlenker 5
- S2: radseitige Anbindungspunkt des vorderen unteren Querlenker 5
- U3: aufbauseitiger Anbindungspunkt des hinteren unteren Querlenker 6
- U4: radseitige Anbindungspunkt des hinteren unteren Querlenker 6
- V: Vertikalrichtung

## Patentansprüche

1. Angetriebene Vierlenker-Hinterachse (1) für ein Kraftfahrzeug, umfassend:
einen Radträger (2), an dem ein Fahrzeugrad (8) drehbar gelagert ist,
einen Längslenker (3), einen oberen Querlenker (4) und zwei untere Querlenker (5, 6) zur fahrzeugaufbauseitigen Abstützung des Radträgers (2),
eine Gelenkwelle (7) zur Übertragung eines Antriebsmoments an das an dem Radträger (2) drehbar gelagerte Fahrzeugrad (8), und
einen Schwingungsdämpfer (9),der mit einem radseitigen Anbindungspunkt (DU) unterhalb der Radmitte (M) an dem Radträger (2) angreift und vor der Gelenkwelle (7) sowie zwischen einem vorderen der unteren Querlenker (5) und dem oberen Querlenker (4) hindurch in Fahrtrichtung (F) geneigt zu einem aufbauseitigen Angriffspunkt (DO) verläuft, wobei in Einbaulageruhestellung der entsprechende Neigungswinkel zur Vertikalen (V) in Fahrtrichtung (F) im Bereich von 20° bis 60° liegt und der aufbauseitige Anbindungspunkt (DO) des Schwingungsdämpfers (9) hierbei innerhalb der Höhe des Fahrzeugrads (8) liegt,
**dadurch gekennzeichnet, dass**
der Schwingungsdämpfer (9) in Fahrtrichtung (F) vor der Radmitte (M) an dem Radträger (2) angreift;
der Schwingungsdämpfer (9) in Fahrzeugquerrichtung (Q) nach innen geneigt ist, wobei in Einbaulageruhestellung der Neigungswinkel zur Vertikalen (V) in Fahrzeugquerrichtung (Q) in einem Bereich von 20 bis 30° liegt,
der radseitige Anbindungspunkt (DU) des Schwingungsdämpfers innerhalb einer Felge des Fahrzeugrads (8) angeordnet ist und der radseitige Anbindungspunkt (S2) des vorderen unteren Querlenkers (5) außerhalb der Felge des Fahrzeugrads (8) liegt, und ein Auftreffpunkt (DA) der Achse (A) des Schwingungsdämpfers (9), welche durch die aufbauseitigen und radseitigen Anbindungspunkte (DO, DU) des Schwingungsdämpfers (9) verläuft, in Fahrzeugquerrichtung um einen positiven Abstand (AY) zum Radaufstandspunkt (RA) nach fahrzeugaußen und in Fahrzeuglängsrichtung um einen positiven Abstand (AX) zum Radaufstandspunkt (RA) entgegen der Fahrrichtung versetzt ist, wobei die diese Abstände (AX, AY) in allen Ein- und Ausfederungszuständen der Hinterachse (1) jeweils stets das gleiche Vorzeichen aufweisen und behalten.

2. Angetriebene Vierlenker-Hinterachse (1) für ein Kraftfahrzeug gemäß Patentanspruch 1, **dadurch gekennzeichnet, dass** der Schwingungsdämpfer (9) mit seinem aufbauseitigen Anbindungspunkt (DO) seitlich, nämlich fahrzeugaußenseitig an einen Längsträger (12) eines Fahrzeugaufbaus angekoppelt ist.

3. Angetriebene Vierlenker-Hinterachse (1) für ein Kraftfahrzeug gemäß Patentanspruch 1 oder 2, **dadurch gekennzeichnet, dass** der aufbauseitige Anbindungspunkt (DO) des Schwingungsdämpfers (9) unterhalb eines Fahrzeugbodens des Kraftfahrzeugs angeordnet ist.

4. Angetriebene Vierlenker-Hinterachse (1) für ein Kraftfahrzeug gemäß einem der Patentansprüche 1 bis 3, **dadurch gekennzeichnet, dass** der radseitige Anbindungspunkt (DU) des Schwingungsdämpfers (9) in Bezug auf die Vertikalrichtung (V) tieferliegend an dem Radträger (2) angekoppelt ist, als ein radseitiger Anbindungspunkt (S2) des vorderen unteren Querlenkers (5).

5. Angetriebene Vierlenker-Hinterachse (1) für ein Kraftfahrzeug gemäß einem der Patentansprüche 1 bis 4, **dadurch gekennzeichnet, dass** der Schwingungsdämpfer (9) stärker in Fahrtrichtung (F) als in Fahrzeugquerrichtung (Q) geneigt ist.

6. Angetriebene Vierlenker-Hinterachse (1) für ein Kraftfahrzeug gemäß einem der Patentansprüche 1 bis 5, **dadurch gekennzeichnet, dass** ein Stabilisator (18) mittels einer Koppelstange (19) unmittelbar an den Radträger (2) angekoppelt ist.

7. Angetriebene Vierlenker-Hinterachse (1) für ein Kraftfahrzeug gemäß Patentanspruch 6, **dadurch gekennzeichnet, dass** der Stabilisator (18) von seinem Ankopplungspunkt an die Koppelstange (19) zunächst in Fahrtrichtung F nach vorn verläuft und anschließend in Fahrzeugquerrichtung Q abgewinkelt ist.

## Claims

1. Driven four-link rear axle (1) for a motor vehicle, comprising:
a stub axle (2) on which a vehicle wheel (8) is rotatably mounted,
a longitudinal link (3), an upper transverse link (4) and two lower transverse links (5, 6) for supporting the stub axle (2) on the vehicle body side,
a cardan shaft (7) for transmitting a drive torque to the vehicle wheel (8) rotatably mounted on the stub axle (2), and
a vibration damper (9) which engages the stub axle (2) with a wheel-side connection point (DU) below the wheel center (M) and extends in front of the cardan shaft (7) and between a front link of the lower transverse links (5) and the upper transverse link (4) in the direction of travel (F) at an inclination to a body-side engagement point (DO), wherein, in the installed rest position, the corresponding angle of inclination to the vertical (V) in the direction of travel (F) is in the range of 20° to 60° and the body-side connection point (DO) of the vibration damper (9) is within the height of the vehicle wheel (8),
**characterized in that**
the vibration damper (9) engages the stub axle (2) in front of the wheel center (M) in the direction of travel (F);
the vibration damper (9) is inclined inwards in the vehicle transverse direction (Q), wherein, in the installed rest position, the angle of inclination to the vertical (V) in the vehicle transverse direction (Q) is in a range of 20 to 30°,
the wheel-side connection point (DU) of the vibration damper is arranged within a rim of the vehicle wheel (8) and the wheel-side connection point (S2) of the front lower transverse link (5) is located outside the rim of the vehicle wheel (8), and
an impact point (DA) of the axis (A) of the vibration damper (9), which runs through the body-side and wheel-side connection points (DO, DU) of the vibration damper (9), is offset in the vehicle transverse direction by a positive distance (AY) from the wheel contact point (RA) towards the outside of the vehicle and in the vehicle longitudinal direction by a positive distance (AX) from the wheel contact point (RA) against the direction of travel, these distances (AX, AY) always having and retaining the same sign in all compression and rebound states of the rear axle (1).

2. Driven four-link rear axle (1) for a motor vehicle according to claim 1, **characterized in that** the vibration damper (9) is coupled with its body-side connection point (DO) laterally, namely on the outside of the vehicle, to a longitudinal member (12) of a vehicle body.

3. Driven four-link rear axle (1) for a motor vehicle according to claim 1 or 2, **characterized in that** the body-side connection point (DO) of the vibration damper (9) is arranged below a vehicle floor of the motor vehicle.

4. Driven four-link rear axle (1) for a motor vehicle according to any of claims 1 to 3, **characterized in that** the wheel-side connection point (DU) of the vibration damper (9) is coupled to the stub axle (2) lower in relation to the vertical direction (V) than a wheel-side connection point (S2) of the front lower transverse link (5).

5. Driven four-link rear axle (1) for a motor vehicle according to any of claims 1 to 4, **characterized in that** the vibration damper (9) is inclined more in the direction of travel (F) than in the vehicle transverse direction (Q).

6. Driven four-link rear axle (1) for a motor vehicle according to any of claims 1 to 5, **characterized in that** a stabilizer (18) is coupled directly to the stub axle (2) by means of a coupling rod (19).

7. Driven four-link rear axle (1) for a motor vehicle according to claim 6, **characterized in that** the stabilizer (18) initially extends forward in the direction of travel F from its coupling point to the coupling rod (19) and is then angled in the vehicle transverse direction Q.

## Revendications

1. Essieu arrière (1) à quatre bras entraîné pour un véhicule automobile, comprenant :
un support de roue (2) sur lequel une roue de véhicule (8) est montée de manière rotative,
un bras longitudinal (3), un bras transversal supérieur (4) et deux bras transversaux inférieurs (5, 6) pour soutenir le support de roue (2) du côté de la carrosserie du véhicule,
un arbre de transmission (7) pour la transmission d'un couple d'entraînement à la roue de véhicule (8) montée de manière rotative sur le support de roue (2), et
un amortisseur de vibrations (9) qui vient en prise avec un point d'attache (DU) côté roue en dessous du centre de roue (M) sur le support de roue (2) et s'étend devant l'arbre de transmission (7) ainsi qu'entre un bras transversal inférieur avant (5) et le bras transversal supérieur (4) dans le sens de la marche (F), incliné vers un point d'attache (DO) côté carrosserie, dans lequel l'angle d'inclinaison correspondant par rapport à la verticale (V) dans le sens de la marche (F) est compris dans la plage de 20 ° à 60 ° dans la position de repos du palier de montage, et le point d'attache (DO) de l'amortisseur de vibrations (9) côté carrosserie est situé à l'intérieur de la hauteur de la roue de véhicule (8),
**caractérisé en ce que**
l'amortisseur de vibrations (9) vient en prise avec le support de roue (2) devant le centre de roue (M) dans le sens de la marche (F) ;
l'amortisseur de vibrations (9) est incliné vers l'intérieur dans le sens transversal (Q) du véhicule, dans lequel l'angle d'inclinaison par rapport à la verticale (V) dans le sens transversal (Q) du véhicule est situé dans une plage de 20 à 30 ° dans la position de repos du palier de montage,
le point d'attache (DU) côté roue de l'amortisseur de vibrations est agencé à l'intérieur d'une jante de la roue de véhicule (8) et le point d'attache (S2) côté roue du bras transversal inférieur avant (5) est situé à l'extérieur de la jante de la roue de véhicule (8), et
un point d'impact (DA) de l'axe (A) de l'amortisseur de vibrations (9), qui passe par les points d'attache (DO, DU) côté carrosserie et côté roue de l'amortisseur de vibrations (9), est décalé dans le sens transversal du véhicule d'une distance positive (AY) par rapport au point d'appui de la roue (RA) vers l'extérieur du véhicule et dans le sens longitudinal du véhicule d'une distance positive (AX) par rapport au point d'appui de la roue (RA) dans le sens opposé au sens de la marche, dans lequel ces distances (AX, AY) présentent et conservent toujours respectivement le même signe dans tous les états de compression et de détente de l'essieu arrière (1).

2. Essieu arrière (1) à quatre bras entraîné pour un véhicule automobile selon la revendication 1, **caractérisé en ce que** l'amortisseur de vibrations (9) est accouplé avec son point d'attache (DO) côté carrosserie latéralement, à savoir côté extérieur du véhicule, à un longeron (12) d'une carrosserie de véhicule.

3. Essieu arrière (1) à quatre bras entraîné pour un véhicule automobile selon la revendication 1 ou 2, **caractérisé en ce que** le point d'attache (DO) côté carrosserie de l'amortisseur de vibrations (9) est agencé en dessous d'un plancher de véhicule du véhicule automobile.

4. Essieu arrière (1) à quatre bras entraîné pour un véhicule automobile selon l'une des revendications 1 à 3, **caractérisé en ce que** le point d'attache (DU) côté roue de l'amortisseur de vibrations (9) est accouplé au support de roue (2) plus bas par rapport à la direction verticale (V) qu'un point d'attache (S2) côté roue du bras transversal inférieur avant (5).

5. Essieu arrière (1) à quatre bras entraîné pour un véhicule automobile selon l'une des revendications 1 à 4, **caractérisé en ce que** l'amortisseur de vibrations (9) est plus fortement incliné dans le sens de la marche (F) que dans le sens transversal (Q) du véhicule.

6. Essieu arrière (1) à quatre bras entraîné pour un véhicule automobile selon l'une des revendications 1 à 5, **caractérisé en ce qu'**une barre stabilisatrice (18) est accouplée directement au support de roue (2) au moyen d'une barre d'accouplement (19).

7. Essieu arrière (1) à quatre bras entraîné pour un véhicule automobile selon la revendication 6, **caractérisé en ce que** la barre stabilisatrice (18) s'étend d'abord vers l'avant dans le sens de la marche F à partir de son point d'accouplement à la barre d'accouplement (19) et est ensuite coudée dans le sens transversal Q du véhicule.
